Europäisches Patentamt

European Patent Office

Office européen des brevets

Veröffentlichungsnummer: **0 285 848**

**A1**

# EUROPÄISCHE PATENTANMELDUNG

Anmeldenummer: 88103863.2

Anmeldetag: **11.03.88**

Int. Cl.4 **B41F 17/00 , B65G 37/02 , B65G 49/00**

Priorität: **30.03.87 DE 3710534**

Veröffentlichungstag der Anmeldung:
**12.10.88 Patentblatt 88/41**

Benannte Vertragsstaaten:
**AT BE CH DE ES FR GB GR IT LI LU NL SE**

Anmelder: **TAMPOflex GmbH**
**Boschstrasse 7**
**D-7257 Ditzingen 1(DE)**

Erfinder: **Berberich, Bernd**
**Paradiesweg 24**
**D-7141 Schwieberdingen(DE)**
Erfinder: **Reinhold, Holger**
**Ludwig-Jahn-Strasse 35/1**
**D-7290 Freudenstadt(DE)**

Vertreter: **Vogel, Georg**
**Hermann-Essig-Strasse 35**
**D-7141 Schwieberdingen(DE)**

## Vorrichtung zum Einstellen eines Satzes von Werkstückträgern in definierte Arbeitspositionen.

Die Erfindung betrifft eine Vorrichtung zum fortlaufenden Einstellen jeweils eines Satzes von Werkstückträgern aus einer Vielzahl von Werkstückträgern in definierte Arbeitspositionen, bei der die Werkstückträger in einem Abstand auf einem endlosen, schrittweise umlaufend bewegten Frödermittel (25) angeordnet sind, der der Schrittlänge des Fördermittels (25) entspricht. Durch zusätzliche, einfache Einstellmittel wird erreicht, daß der Satz von Werkstückträgern in den Arbeitspositionen auf von der Schrittlänge abweichende Abstände eingestellt werden kann. Dabei werden die so eingestellten Arbeitspositionen beim Umlauf des endlosen Fördermittels (25) immer wieder erhalten.

FIG.1

EP 0 285 848 A1

# Vorrichtung zum Einstellen eines Satzes von Werkstückträgern in definierte Arbeitspositionen

Die Erfindung betrifft eine Vorrichtung zum fortlaufenden Einstellen jeweils eines Satzes von Werkstückträgern aus einer Vielzahl von Werkstückträgern in definierte Arbeitspositionen, bei der die Werkstückträger in einem Abstand auf einem endlosen, schrittweise umlaufend bewegten Fördermittel angeordnet sind, der der Schrittlänge des Fördermittels entspricht.

Derartige Vorrichtungen werden z.B. bei Tampondruckmaschinen eingesetzt, um für einen Vierfarbendruck jeweils vier Werkstückträger unter vier Tampons zu stellen, die die Druckbilder von vier unterschiedlich eingefärbten Klischees auf die auf den Werkstückträgern festgelegten Werkstück übertragen. Der Einsatz derartiger Vorrichtungen ist aber nicht darauf beschränkt.

Bei diesen Vorrichtungen sind die Arbeitspositionen für den Satz von Werkstückträgern fest vorgegeben und der gegenseitige Abstand entspricht exakt der Schrittlänge des Fördermittels. In der Praxis hat es sich jedoch gezeigt, daß bei fest vorgegebenen Arbeitspositionen der zur Bearbeitung anstehenden Werkstücke Schwierigkeiten bestehen, da die Zubringer oft nicht exakt diese Teilung einhalten können. Bei einer Mehrfarben-Tampondruckmaschine können z.B. die Klischees in den Klischeehalter der Umwelteinflüsse oder dgl. von den Teilungen abweichen, was zu einem - schlechten Druckbild führt.

Es ist Aufgabe der Erfindung, eine Vorrichtung der eingangs erwähnten Art zu schaffen, bei der der Abstand der Arbeitspositionen der Werkstückträger auf einfache Art in einem vorgegebenen Bereich verändert werden kann und bei der diese Korrektur dann beim Durchlauf des Fördermittels für den gerade in den Arbeitspositionen befindlichen Satz von Werkstückträgern automatisch durchgeführt wird.

Diese Aufgabe wird nach der Erfindung dadurch gelöst, daß die Werkstückträger auf einem aus Transportschuppen gebildeten endlosen Fördermittel befestigt sind, daß die Transportschuppen mittels Laschen im Abstand der Schrittlänge gelenkig miteinander verbunden und in einer Führungsbahn geführt sind, daß die Gelenkverbindungen der Laschen in Förderrichtung des Fördermittels ein vorgegebenes Spiel aufweisen, daß die Transportschuppen mittels im Bereich der Gelenkverbindungen angeordneten Führungsrollen in eine Aufnahme einer in Drehbewegung versetzbaren Antriebswalze einführbar sind, deren Aufnahme sich über mindestens eine Schrittlänge plus dem doppelten Durchmesser der Führungsrollen erstreckt, daß mittels der Antriebswalze die eingeführte Führungsrolle und damit Transportschuppe und Werkstückträger in eine definierte Bezugsstellung bringbar ist, und daß die Führungsrollen der den Satz ergänzenden Transportschuppen und Werkstückträger dabei in Aufnahmen von Positionierwalzen eingeführt sind, die mittels durch Gewindestangen verstellbaren Schieber mit Verschieberollen auf einer die Antriebswalze tragenden Antriebswelle axial verstellbar, jedoch drehfest darauf gehalten und in von der Schrittlänge abweichenden Abständen untereinander einstellbar sind.

Das aus Transportschuppen gebildete Fördermittel kann in einer Schleife bewegt werden, ohne daß dadurch Trennfugen zwischen den Transportschuppen entstehen. Dabei genügt es, die Transportschuppen in einer Führungsbahn zu führen und untereinander über Laschen gelenkig miteinander zu verbinden. Die Antriebswalze übernimmt die schrittweise Bewegung der Transportschuppen und das Spiel in den Gelenkverbindungen erlaubt eine Veränderung des Abstandes der Transportschuppen und damit der Werkstückträger. Die in der Antriebswalze geführte und in die Bezugsstellung gebrachte Führungsrolle bestimmt die erste Arbeitsposition der zugeordneten Transportschuppe. Die restlichen Arbeitspositionen werden durch die Positionierwalzen bestimmt, die die Führungsrollen der anderen Transportschuppen, d.h. Werkstückträger des Satzes, aufnehmen. Mit Hilfe der Verschieberollen können diese Positionierrollen auf der Antriebswelle der Antriebswalze axial begrenzt verstellt werden, so daß die Abstände der Arbeitspositionen individuell eingestellt werden können. Die Verschieberollen werden von Schiebern getragen, die auf einer Trägerwelle axial verschiebbar, jedoch drehfest gehalten sind. Die Schieber werden mittels Gewindestangen verstellt. Sind die Positionierwalzen in die richtigen Arbeitspositionen eingestellt, dann werden fortlaufend die gerade den Satz bildenden Transportschuppen und Werkstückträger in die so veränderten Arbeitspositionen gebracht. Die Abstände zwischen den Arbeitspositionen können dabei etwas kleiner oder auch größer als die Schrittlänge des Fördermittels sein, die durch die Antriebswalze und den Antrieb der Antriebswelle vorgegeben wird.

Die Führung der Transportschuppen mit den Führungsrollen ist nach einer Ausgestaltung so ausgeführt, daß die Transportschuppen in einer Führungsbahn einer Deckplatte geführt sind, die beidseitig durch einen Absatz der Deckplatte gebildet ist, daß die Führungsbahn einen Durchbruch aufweist, durch den ein Lagerabschnitt und der Führungsrolle ragt, daß die Führungsrollen in einem Durchbruch einer Zwischenplatte geführt sind und daß die Laschen auf den Lagerabschnitten der Führungsrollen drehbar gelagert sind. Die Lagerabschnitte für die Führungsrollen übernehmen auch die Drehlagerung der Laschen.

Die begrenzte Veränderung des Abstandes zwischen den Transportschuppen, die oft nur wenige Millimeter betragen muß, wird dadurch ermöglicht, daß die Durchbrüche in den Laschen für die Lagerabschnitte als Langlöcher ausgebildet sind, deren Breite dem Durchmesser der Lagerabschnitte und deren Länge dem Durchmesser der Lagerabschnitte plus einer maximalen Ausgleichslänge entsprechen.

Die Übertragung der Förderbewegung von der Antriebswalze auf die Fördermittel erfolgt nach einer Ausgestaltung in der Weise, daß die Aufnahme der Antriebswalze eine dem Durchmesser der Führungsrollen entsprechende Breite aufweist und daß die Antriebswalze bei einer Umdrehung der Antriebswelle über die längsverlaufend - schraubenförmige Aufnahme eine Förderbewegung auf die in der Aufnahme geführte Führungsrolle überträgt, die der Schrittlänge entspricht.

Die Drehbewegung für die Antriebswalze wird dadurch abgeleitet, daß die Antriebswalze über ein auf der Antriebswelle drehfest sitzendes Antriebszahnrad antreibbar ist, das über einen Zahnriemen von einem Abtriebszahnrad eines von einem Motor angetriebenen Planetengetriebes in Drehbewegungen versetzbar ist.

Die axiale Verstellbarkeit und die drehfeste Festlegung der Positionierwalzen auf der Antriebswelle werden dadurch erhalten, daß die Antriebswelle mit Längsnuten versehen ist, und daß die Positionierwalzen in ihrer Lagerbohrung entsprechend verteilte und in den Längsnuten der Antriebswelle geführte Federn aufweisen.

Die Ausgestaltung der Positionierwalzen wird dadurch vereinfacht, daß die Positionierwalzen eine umlaufende, durch Seitenwände begrenzte Nut aufweisen, die im äußeren Bereich eine dem Durchmesser der Führungsrollen entsprechende Breite und im Grundbereich eine dem Durchmesser der Verschieberollen entsprechende Breite aufweisen, daß die Seitenwände der Nut im äußeren Bereich eine Einführungsöffnung für die Führungsrollen aufweisen, und daß die Verschieberollen gegenüber den Führungsrollen versetzt in dem Grundbereich der Nuten der Positionierwalzen geführt sind.

Über die Einführungsöffnung gelangt die ankommende Führungsrolle in die Nut der Positionierwalze, die bei der Drehbewegung der Antriebswelle dann die Führungsrolle in der zugeordneten Arbeitsposition hält. Im Bereich des Nutgrundes ist die Verschieberolle in der Nut geführt und zwar versetzt zur Führungsrolle, so daß sich die einer Arbeitsposition zugeordnete Führungsrolle und die zugeordnete Verschieberolle gegenseitig nicht beeinträchtigen.

Die axiale Verstellung der der Verschieberolle und der damit im Eingriff stehenden Positionierwalze wird dadurch erreicht, daß die Verschieberollen auf Schieber gelagert sind, die auf Trägerwellen unverdrehbar, jedoch axial verstellbar geführt sind, und daß die Verstellung über Gewindestangen erfolgt, die in Gewindeaufnahmen der Schieber eingeschraubt sind.

Die Ausgestaltung der Transportschuppen ist in Anlehnung an die an sich bekannten Transportbänder für Gepäckstücke und dgl. so ausgeführt, daß die Transportschuppen an den einander zugekehrten Seiten konvex bzw. konkav kreisbogenförmig ausgebildet, fugenlos ineinander eingreifen und gegeneinander verdrehbar sind.

Die Erfindung wird anhand eines in den Zeichnungen dargestellten Ausführungsbeispiels näher erläutert. Es zeigt:

Fig. 1 die Vorrichtung in Draufsicht,

Fig. 2 ein Schnitt durch die Vorrichtung entlang der Linie II-II der Fig. 1,

Fig. 3 einen Teilschnitt durch die Vorrichtung entlang der Linie III-III der Fig. 1,

Fig. 4 eine Teilansicht auf eine Querseitenwand, in der die Antriebswelle und die Trägerwelle gelagert sind, und

Fig. 5 einen Teilschnitt durch die Vorrichtung entlang der Linie V-V der Fig. 1, aus dem die Mittel für die Verstellung einer Positionierwalze zu entnehmen sind.

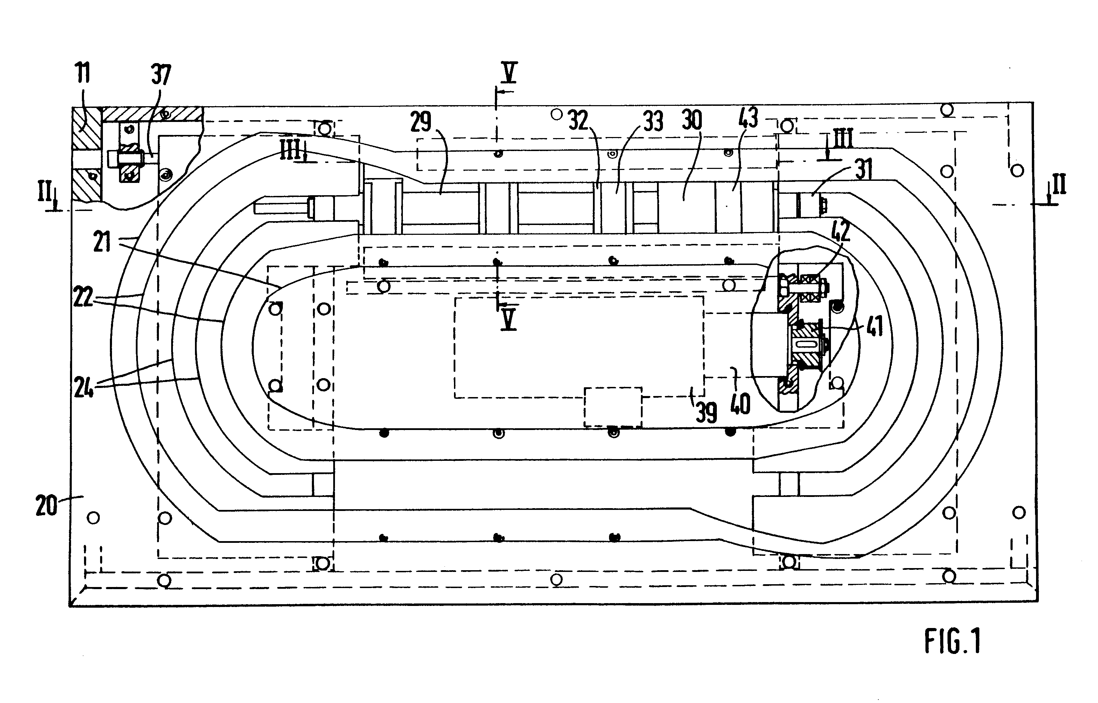

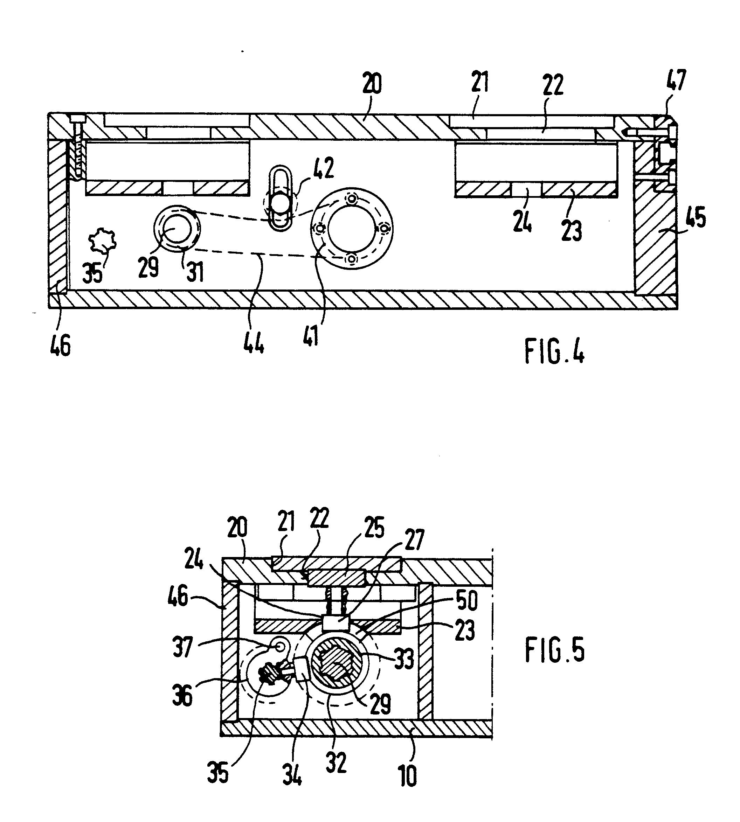

Die Oberseite der Vorrichtung wird, wie Fig. 1 zeigt, durch die Deckplatte 20 abgedeckt. Die Grundplatte 10 und die Seitenwände 11, 12, 45 und 46 vervollständigen die Außenverkleidung der Vorrichtung. An der oberen Vorderkante und den daraufstoßenden Seitenkanten sind Nutleisten 13, 14 und 47 befestigt, die eine Befestigungsmöglichkeit für externe Zusatzteile bieten. Die Grundplatte 10 hat eine Ausnehmung 15, die mittels eines Verschlußdeckels 16 verschließbar ist. Diese Ausnehmung 15 verschafft Zugang zu dem Zahnriemen 44, der das Antriebszahnrad 31 der Antriebswelle 29 mit dem Abtriebszahnrad 41 verbindet. Der Zahnriemen 44 läßt sich durch die verstellbare Spannrolle 42 spannen. Das Abtriebszahnrad 41 wird über das Planetengetriebe 40, von dem als Elektromotor ausgebildeten Motor 39 angetrieben, wie den Fig. 1 und 4 zu entnehmen ist.

In der Deckplatte 20 wird durch Absätze zu beiden Seiten des Durchbruches 22 die Führungsbahn 21 gebildet, die in der unter der Deckplatte 20 angeordneten Zwischenplatte 23 mit dem Durchbruch 24 vervollständigt wird. In der Führungsbahn 21 und dem Durchbruch 22 sind die Transportschuppen 25 geführt. Die Führungsbahn 21 bildet eine Schleife, wobei die Transportschuppen 25 an den einander zugekehrten Seiten konkav und konvex kreisbogenförmig ineinandergreifen und gegeneinander verdrehbar sind. An der Unterseite der Transportschuppen 25 sind die Lagerabschnitte 26 angebracht. auf denen die Laschen 28 drehbar gelagert sind. Die Lagerabschnitte 26 sind mit den drehbaren Führungsrollen 27 abgeschlossen. Die Aufnahmen für die Lagerabschnitte 26 sind in den Laschen 28 als Langlöcher ausgebildet, die eine begrenzte Veränderung der Führungsbolzen benachbarter Transportschuppen 25 zulassen. Wie die Fig. 1 zeigt, sind die Führungsrollen 27 in den Umlenkbereichen in dem Durchbruch 24 der Zwischenplatten 23 geführt. Auf den Transportschuppen 25 sind die Werkstückträger befestigt, die die zu bearbeitenden Werkstücke aufnehmen. Die Transportschuppen 25 bilden ein horizontal endlos·umlaufendes Fördermittel. Die Schleife der Transportschuppen 25 kann jedoch auch vertikal ausgerichtet sein.

Der Antrieb der Transportschuppen 25 erfolgt über die Antriebswalze 30. die drehfest auf der Antriebswelle 29 sitzt. Diese Antriebswlaze 30 weist eine Aufnahme 43 auf, in die die Führungsrollen 27 der Transportschuppen 25 einlaufen. Die Aufnahme 43 verläuft schraubenförmig und erstreckt sich in Förderrichtung über eine Strecke, die sich mindestens aus der Schrittlänge, d.h. dem Abstand der Transportschuppen 25, plus dem doppelten Durchmesser der Führungsrollen 27 ergibt. Am einfachsten wird pro Schritt des Fördermittels die Antriebswalze 30 einmal gedreht, so daß mittels eines einfachen Endschalters der Antrieb gesteuert werden kann. Es ist damit gewährleistet, daß stets eine Förderrolle 27 im Eingriff mit der Aufnahme 43 der Antriebswalze 30 steht und die Transportschuppen 25 bei der nächsten Umdrehung der Antriebswelle wieder um eine Schrittlänge in Förderrichtung weiterbewegt werden. Die Schrittlänge entspricht dabei dem Abstand der Gelenkverbindungen der Laschen 28 und auch der Führungsrollen 27. Bei stillstehender Antriebswalze 30 ist die in der Aufnahme 43 geführte Führungsrolle 27 und die zugeordnete Transportschuppe 25 mit dem Werkstückträger in einer festen Bezugsposition. Gehören zu einem Satz noch drei weitere Werkstückträger, dann sind auf der Antriebswelle 29 drei Positionierwalzen 32 angeordnet, die wie Fig. 5 erkennen läßt, unverdrehbar, jedoch axial verschiebbar auf der Antriebswelle 29 sitzen. Die Positionierwalzen 32 haben eine umlaufende Nut 33 mit einer Einführungsöffnung 50, über die die Führungsrollen 27 in die Nuten 33 einlaufen. Bei einer Drehbewegung der Antriebswelle 29 bestimmen die Seitenwände der Nut 33 mit den äußeren Bereichen die Arbeitsposition der zugeordneten Führungsrolle 27 der Transportschuppe 25 mit dem Werkstückträger. Die Antriebswelle 29 hat Längsnuten, in die Federn der Bohrung der Positionierwalzen 32 eingreifen. Die Kugellager 48 und 49 lagern die Antriebswelle 29 in den Zwischenwänden 18 und 19.

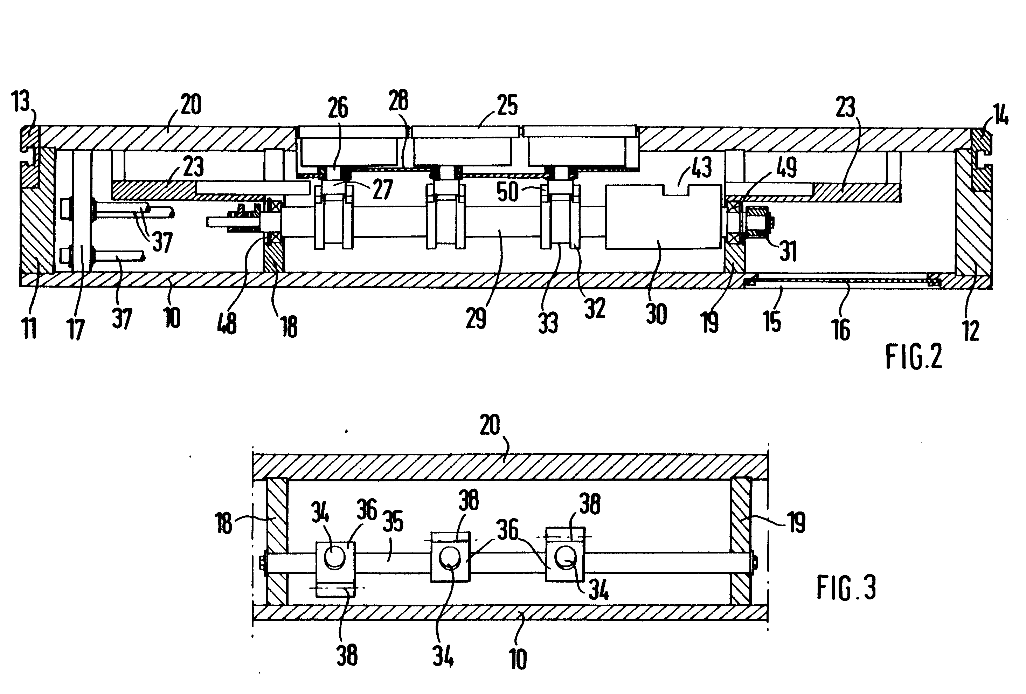

Wie die Fig. 3 und 5 zeigen, sind auf der Trägerwelle 35 drei Schieber 36 unverdrehbar, jedoch axial verschiebbar aufgebracht. Die Trägerwelle 35 ist drehfest in den Zwischenwänden 18 und 19 festgelegt. Jeder Schieber 36 trägt eine drehbar gelagerte Verschieberolle 34, die bis in den Bereich des Nutgrundes der Nut 33 der zugeordneten Positionierwalze 32 eingeführt ist, gegenüber der Führungsrolle 27 in der Nut 33 jedoch versetzt angeordnet ist. In der Zwischenwand 17 sind drei Gewindestangen 37 gelagert, die in Gewindeaufnahmen 38 der Schieber 36 eingeschraubt sind. Mit den Gewindestangen 37. die durch die Seitenwand 11 hindurch bedient werden können, lassen sich die Schieber 36 auf der Trägerwelle 35 axial begrenzt verstellen. Über die in den Nuten 33 der Positionierwalzen 32 geführten Verschieberollen 34 werden dabei auch die Positionierwalzen verstellt. Das Spiel in den Gelenkverbindungen der Laschen 28 begrenzt die Verstellbarkeit der Positionierwalzen 32 und damit auch der Schieber 36. Auf diese Weise lassen sich - bezogen auf die Führungsrolle 27 in der Bezugsposition der Antriebswalze 30 - die Führungsrollen 27 der drei nachfolgenden Führungsrollen 27 auf Abstände einstellen, die von der Schrittlänge der Fördermittel abweichen. Dabei kann eine positive oder negative Abweichung eingestellt werden. Werden die Fördermittel um einen Schritt weitergeschaltet, dann gelangt die der Antriebswalze 30 benachbarte Führungsrolle 27 in die Aufnahme 43 und eine neue Förderrolle 27 vervollständigt den Satz der vier in den Arbeitspositionen stehenden Führungsrollen 27. Was für die Führungsrollen 27 gesagt wird, trifft auch für die zugeordneten Transportschuppen 25 mit ihren Werkstückträgern zu. In den Arbeitspositionen werden daher beim Durchlauf der Fördermittel stets die eingestellten Abstände erzwungen, die auf die Gegebenheiten der Zubringer und dgl. abgestimmt werden können.

## Ansprüche

1. Vorrichtung zum fortlaufenden Einstellen jeweils eines Satzes von Werkstückträgern aus einer Vielzahl von Werkstückträgern in definierte Arbeitspositionen, bei der die Werkstückträger in einem Abstand auf einem endlosen, schrittweise umlaufend bewegten Fördermittel angeordnet sind, der der Schrittlänge des Fördermittels entspricht, dadurch gekennzeichnet,

daß die Werkstückträger auf einem aus Transportschuppen (25) gebildeten endlosen Fördermittel befestigt sind, daß die Transportschuppen (25) mittels Laschen (28) im Abstand der Schrittlänge gelenkig miteinander verbunden und in einer Führungsbahn (21,22,24) geführt sind.

daß die Gelenkverbindungen der Laschen (28) in Förderrichtung des Fördermittels ein vorgegebenes Spiel aufweisen.

daß die Transportschuppen (25) mittels im Bereich der Gelenkverbindungen angeordneten Führungsrollen (27) in eine Aufnahme (43) einer in Drehbewegung versetzbaren Antriebswalze (30) einführbar sind, deren Aufnahme (43) sich über mindestens eine Schrittlänge plus dem doppelten Durchmesser der Führungsrollen (27) erstreckt,

daß mittels der Antriebswalze (30) die eingeführte Führungsrolle (27) und damit Transportschuppe (25) und Werkstückträger in eine definierte Bezugsstellung bringbar ist, und

daß die Führungsrollen (27) der den Satz ergänzenden Transportschuppen (25) und Werkstückträger dabei in Aufnahmen (33) von Positionierwalzen (32) eingeführt sind, die mittels durch Gewindestangen (37) verstellbaren Schieber (36) mit Verschieberollen (34) auf einer die Antriebswalze (30) tragenden Antriebswelle (29) axial verstellbar, jedoch drehfest darauf gehalten und in von der Schrittlänge abweichenden Abständen untereinander einstellbar sind.

2. Vorrichtung nach Anspruch 1,
dadurch gekennzeichnet,
daß die Transportschuppen (25) in einer Führungsbahn (21) einer Deckplatte (20) geführt sind, die beidseitig durch einen Absatz der Deckplatte (20) gebildet ist, daß die Führungsbahn (21) einen Durchbruch (22) aufweist, durch den ein Lagerabschnitt (26) und der Führungsrolle (27) ragt,

daß die Führungsrollen (27) in einem Durchbruch (24) einer Zwischenplatte (23) geführt sind und daß die Laschen (28) auf den Lagerabschnitten (26) der Führungsrollen (27) drehbar gelagert sind.

3. Vorrichtung nach Anspruch 1 oder 2,
dadurch gekennzeichnet,
daß die Durchbrüche in den Laschen (28) für die Lagerabschnitte (26) als Langlöcher ausgebildet sind, deren Breite dem Durchmesser der Lagerabschnitte (26) und deren Länge dem Durchmesser der Lagerabschnitte (26) plus einer maximalen Ausgleichslänge entsprechen.

4. Vorrichtung nach einem der Ansprüche 1 bis 3,
dadurch gekennzeichnet,
daß die Aufnahme (43) der Antriebswalze (30) eine dem Durchmesser der Führungsrollen (27) entsprechende Breite aufweist und
daß die Antriebswalze (30) bei einer Umdrehung der Antriebswelle (29) über die längsverlaufend - schraubenförmige Aufnahme (43) eine Förderbewegung auf die in der Aufnahme (43) geführte Führungsrolle (27) überträgt, die der Schrittlänge entspricht.

5. Vorrichtung nach einem der Ansprüche 1 bis 4,
dadurch gekennzeichnet,
daß die Antriebswalze (30) über ein auf der Antriebswelle (29) drehfest sitzendes Antriebszahnrad (31) antreibbar ist, das über einen Zahnriemen (44) von einem Abtriebszahnrad (41) eines von einem Motor (39) angetriebenen Planetengetriebes (40) in Drehbewegungen versetzbar ist.

6. Vorrichtung nach einem der Ansprüche 1 bis 5,
dadurch gekennzeichnet,
daß die Antriebswelle (29) mit Längsnuten versehen ist, und
daß die Positionierwalzen (32) in ihrer Lagerbohrung entsprechend verteilte und in den Längsnuten der Antriebswelle (29) geführte Federn aufweisen.

7. Vorrichtung nach einem der Ansprüche 1 bis 6,
dadurch gekennzeichnet,
daß die Positionierwalzen (32) eine umlaufende, durch Seitenwände begrenzte Nut aufweisen, die im äußeren Bereich eine dem Durchmesser der Führungsrollen (27) entsprechende Breite und im Grundbereich eine dem Durchmesser der Verschieberollen (34) entsprechende Breite aufweisen,
daß die Seitenwände der Nut (33) im äußeren Bereich eine Einführungsöffnung (50) für die Führungsrollen (27) aufweisen, und
daß die Verschieberollen (34) gegenüber den Führungsrollen (27) versetzt in dem Grundbereich der Nuten (33) der Positionierwalzen (32) geführt sind.

8. Vorrichtung nach Anspruch 7,
dadurch gekennzeichnet,
daß die Verschieberollen (34) auf Schieber (36) gelagert sind, die auf Trägerwellen (35) unverdrehbar, jedoch axial verstellbar geführt sind, und
daß die Verstellung über Gewindestangen (37) erfolgt, die in Gewindeaufnahmen (38) der Schieber (36) eingeschraubt sind.

9. Vorrichtung nach einem der Ansprüche 1 bis 8,
dadurch gekennzeichnet,
daß die Transportschuppen (25) an den einander zugekehrten Seiten konvex bzw. konkav kreisbogenförmig ausgebildet, fugenlos ineinander eingreifen und gegeneinander verdrehbar sind.

FIG.1

0 285 848

FIG.2

FIG.3

0 285 848

FIG.4

FIG.5

A6664

## Europäisches Patentamt

# EUROPÄISCHER RECHERCHENBERICHT

| EINSCHLÄGIGE DOKUMENTE | | | EP 88103863.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO - A1 - 86/04 019 (TAMPOFLEX)<br>* Zusammenfassung *<br>-- | 1 | B 41 F 17/00<br>B 65 G 37/02<br>B 65 G 49/00 |
| A | DE - B2 - 1 456 663 (LANGENDORF)<br>* Patentansprüche *<br>-- | 1 | |
| A | US - A - 4 149 620 (ROSENSWEIG)<br>* Fig. 1 *<br>---- | 1 | |

**RECHERCHIERTE SACHGEBIETE (Int. Cl.4)**

B 41 F

B 65 G

Der vorliegende Recherchenbericht wurde für alle Patentansprüche erstellt.

| Recherchenort | Abschlußdatum der Recherche | Prüfer |
|---|---|---|
| WIEN | 31-05-1988 | BAUMGARTNER |